# FASCICULE DE BREVET EUROPEEN

(11) **EP 2 282 924 B1**
(45) Date de publication et mention de la délivrance du brevet: **28.06.2017**
(21) Numéro de dépôt: 09750007.8
(22) Date de dépôt: 05.05.2009
(51) Int. Cl.: B62D 47/02, B62D 31/02, B62D 53/00, B60W 30/12, B60D 1/24

(54) **VÉHICULE ROUTIER MOTORISÉ POUR LE TRANSPORT DE PASSAGERS, APTE À CIRCULER SEUL ET À VENIR S'ARTICULER À D'AUTRES VÉHICULES POUR CONSTITUER UN TRAIN ROUTIER**
KRAFTFAHRZEUG ZUM TRANSPORT VON PASSAGIEREN, DAS ALS EINZIGES FAHRZEUGTEIL ODER MIT ZUZSÄTZLICHEN ANGESCHLOSSENEN FAHRZEUGTEILE ALS ZUG FAHREN KANN
MOTORIZED ROAD VEHICLE FOR TRANSPORTING PASSENGERS, CAPABLE OF RUNNING ALONE AND OF BEING ARTICULATED TO OTHER VEHICLES TO FORM A ROAD TRAIN

(30) Priorité: 06.05.2008 FR 0802518
(43) Date de publication de la demande: 16.02.2011
(73) Titulaire: NewTL, 67120 DUPPIGHEIM (FR)
(72) Inventeur: ANDRE, Jean-Luc, F-67120 Molsheim (FR)
(74) Mandataire: Jeannequin, Pierre
(86) Numéro de dépôt international: PCT/FR2009/000527
(87) Numéro de publication internationale: WO 2009/141526

(56) Documents cités:
- EP-A- 0 536 433
- WO-A1-2007/132121
- DE-A1- 4 411 241
- FR-A- 2 930 928
- JP-A- 2000 247 266

## Description

La présente invention se rapporte à un véhicule routier motorisé et indépendant en énergie motrice ou relié à un réseau d'alimentation, pour le transport de personnes, apte à venir se relier à d'autres véhicules routiers du même type pour la constitution d'une rame ou d'un train routier formé d'au moins deux véhicules articulés entre eux.

Chaque véhicule routier de l'invention comporte une porte sur chacune de ses faces frontales à travers chacune desquelles les passagers peuvent accéder au véhicule adjacent lorsque ceux-ci sont groupés en rames ou en trains routiers.

Le transport urbain et interurbain de personnes par des véhicules routiers s'oriente actuellement vers des solutions à rames ou à trains routiers qui sont des ensembles formés de plusieurs véhicules routiers motorisés et, à l'état isolés indépendants en énergie motrice ou reliés à un réseau d'alimentation, mais regroupables puis dissociables rapidement.

Pour plusieurs besoins, il faut réduire au maximum la distance entre les véhicules pour, entre autres, rendre impossible la traversée du convoi par les riverains, les passants, les vélos, etc... Généralement, cette sécurité est assurée, pour les petits véhicules touristiques par exemple, par des liens physiques, chaînes et autres peu esthétiques présentes de part et d'autre du timon d'attelage.

On connait par exemple le système de véhicules divulgués dans la demande de brevet DE 44 11 241 A1, qui peuvent être dissociés ou assemblés sous la forme d'un train routier. Cette demande de brevet montre un système de véhicule conforme au préambule de la revendication 1, et lorsqu' ils sont assemblés, les véhicules ne sont pas reliés par une liaison mécanique de longueur constante disposée selon l'axe longitudinal médian, mais par deux bras de couplage, disposés sur les côtés de la face avant de chaque véhicule suiveur et dont la longueur et l'orientation angulaire peut varier pendant le roulage.

Les véhicules suiveurs sont guidés précisément au moyen d'un ordinateur qui détecte automatiquement les mouvements du véhicule de tête et qui utilise ces données pour piloter les bras de couplage de façon que les véhicules suiveurs suivent exactement la même trajectoire que le véhicule de tête.

Les faces frontales avant et arrière des véhicules divulgués sont classiquement planes et disposées verticalement ou de façon inclinée selon les variantes.

Dans une version adaptée au transport de passagers, un passage de transition peut être prévu entre les véhicules. Celui-ci est alors protégé par un revêtement en accordéon de type soufflet, qui sert de protection supplémentaire.

Dans le cadre de l'invention, il n'est plus nécessaire de prévoir des protections supplémentaires pour remplir cette fonction en raison de l'espace réduit entre les véhicules lorsqu'ils sont raccordés.

Pour la mise en oeuvre de cette technique de transport de personnes utilisant le groupement en rames ou trains routiers se pose de suite deux problèmes importants qu'il faut résoudre simultanément. Il s'agit d'une part de la commodité, de la rapidité et la fiabilité de la liaison articulée inter-véhicules et de sa dissociation et d'autre part de la possibilité pour les passagers de passer d'un module à l'autre sans descendre de voiture afin de se rendre à temps dans le véhicule correspondant à la direction de l'itinéraire souhaité pour la suite du trajet après décomposition de la rame routière en véhicules unitaires. Ce passage doit aussi être protégé contre toute intrusion latérale.

Pour la solution au premier problème, il faut disposer d'une liaison articulée adaptée et rapidement dissociable, garantissant au moins en ligne droite un espace minimal inter-véhicules, et un alignement des véhicules en ligne droite ainsi qu'un pilotage en direction quasi monotrace pour le ou chaque véhicule suiveur et un réalignement automatique en sortie de courbes.

Pour la solution au deuxième problème, il faut disposer de portes d'accès sur les faces frontales en regard et un passage d'intercirculation le plus court possible.

D'autres caractéristiques et avantages de l'invention apparaîtront dans la description qui suit, donnée à titre d'exemple et accompagnée des dessins dans lesquels :
- la figure 1 est une vue schématique en perspective d'un module routier isolé montrant des voyageurs utilisant les portes latérales,
- la figure 2 est une vue schématique en perspective illustrant l'approche d'un deuxième module routier en vue de l'accouplement,

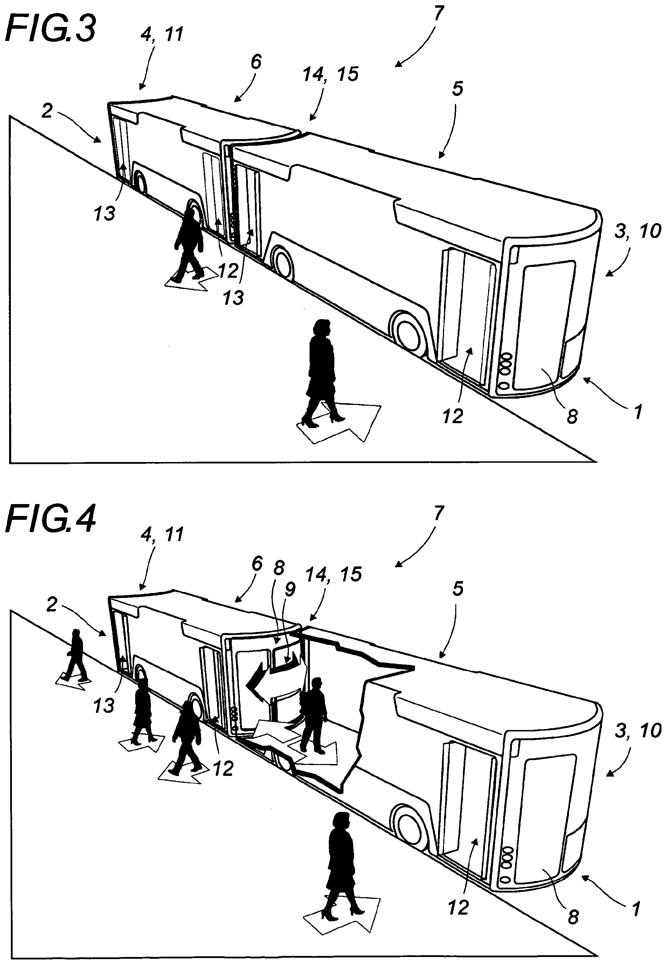

- la figure 3 est une vue schématique en perspective montrant deux véhicules routiers du même type reliés entre eux selon un espace intermédiaire inter-véhicules minimal,
- la figure 4 est une vue schématique en perspective montrant par un écorché l'ouverture d'une porte de communication entre les véhicules.
- la figure 5 est une vue en plan de plusieurs véhicules routiers reliés entre eux par un exemple de liaison mécanique en configuration de ligne droite,
- la figure 6 est une vue de profil montrant une suite de plusieurs véhicules reliés entre eux selon l'exemple de liaison mécanique de la figure 5,
- la figure 7 est une vue en plan de plusieurs véhicules routiers reliés entre eux de la même façon en configuration de virage,

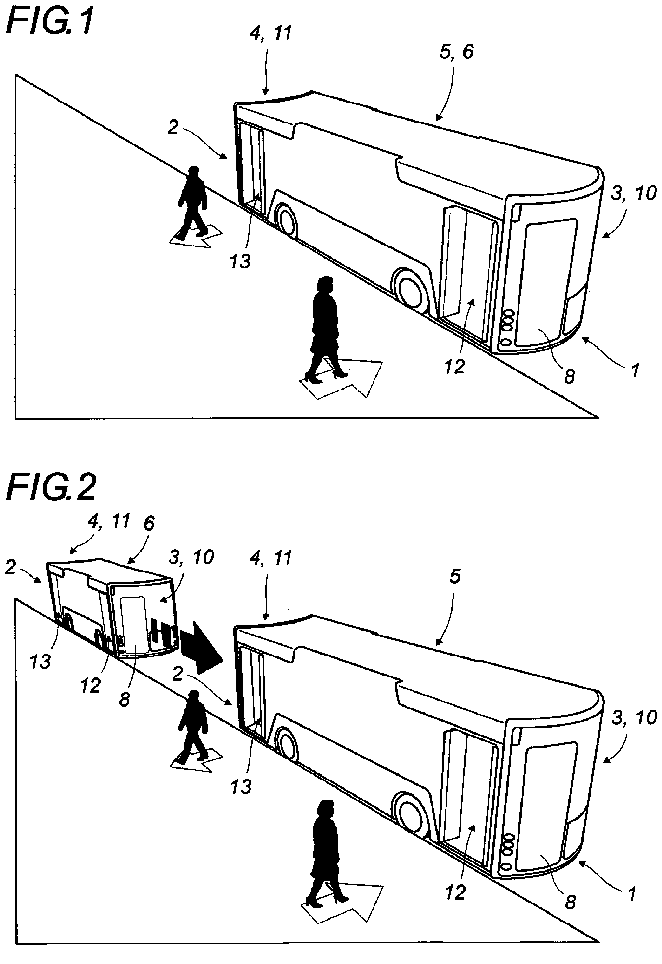

Le véhicule routier selon l'invention, motorisé et indépendant en énergie motrice ou relié à un réseau d'alimentation tel que représenté schématiquement sur la figure 1 présente une partie avant 1 et une partie arrière 2 formant une face avant 3 et une face arrière 4.

Lorsque deux véhicules l'un avant meneur 5 et l'autre arrière suiveur 6 se trouvent reliés entre eux en position de ligne droite pour constituer une rame ou un train routier 7, les faces correspondantes 3 et 4 sont en regard. Chacune des faces 3 et 4 est équipée au moins d'une porte de communication respectivement 8 et 9.

Sont préférées les faces frontales incurvées, curvilignes, en arc circulaire ou autrement courbes ainsi que celles présentant le moins de risques d'interférences possibles entre elles dans les courbes, lorsque les véhicules 5 et 6 sont attelés.

On peut citer à titre d'exemple, les faces de forme circulaire l'une convexe 10 à l'avant et l'autre concave 11 à l'arrière comme représenté sur les premières figures.

Le véhicule motorisé selon l'invention comporte aussi des portes latérales avant 12 et arrière 13 d'entrée et de sortie des voyageurs.

Le véhicule routier motorisé selon l'invention est appelé à fonctionner seul, de manière indépendante comme un simple véhicule routier de transport de personnes, mais aussi dans un autre mode dit mode groupé, dans lequel il est raccordé à d'autres véhicules routiers pour former une rame ou un train routier 7. Dans ce mode groupé, seul le véhicule de tête comporte un chauffeur. Dans la rame ou le train routier 7 un ou plusieurs autres véhicules peuvent utiliser leur source motrice à pleine puissance ou à puissance partielle ou réduite. En principe, les véhicules suiveurs n'ont pas de chauffeur.

Dans le mode groupé, deux véhicules successifs 5 et 6 sont articulés entre eux en formant un espace intermédiaire 14 utilisé comme espace de passage des voyageurs ou passagers d'un véhicule à l'autre dit passage d'intercirculation 15.

Le véhicule routier motorisé selon l'invention est prédisposé à ce deuxième usage en possédant à l'avant et à l'arrière des moyens d'attelage fractionnés.

A cet effet, il comporte à l'avant des moyens avant de liaison fractionnable et d'orientation 16 aptes à se raccorder à des moyens complémentaires sur l'arrière d'un autre véhicule routier meneur de manière à constituer une liaison articulée complète fractionnable du type mécanique ou immatérielle pour la constitution d'une rame ou d'un train routier 7 d'au moins deux véhicules routiers : l'un meneur 5 et l'autre suiveur 6, rame dans laquelle seul le véhicule meneur 5 a un chauffeur.

A cet effet, il comporte à l'arrière des moyens arrière d'attelage 17 aptes à se raccorder ou à recevoir les moyens complémentaires de la liaison articulée fractionnable qui peut le relier à un autre véhicule routier pour lequel il serait meneur.

Concernant ces moyens d'attelage présents à l'avant, il peut s'agir comme représenté à titre d'exemple, d'un timon 18 porté sous la partie avant 1 de chaque véhicule et monté pivotant sur le châssis de celui-ci par un centre de pivotement 19 en coopération avec un ensemble de pilotage en direction à consigne de trajectoire du véhicule suiveur agissant sur son ensemble de direction 20, de manière à obtenir un réalignement des véhicules reliés après une prise de courbe et un comportement quasi monotrace de ce véhicule suiveur.

Le timon 18 est monté pivotant sous la partie avant du véhicule de préférence en position longitudinale médiane et à proximité de l'axe d'essieu avant du véhicule.

Le timon est monté de façon à rester dans le périmètre d'emprise au sol du véhicule.

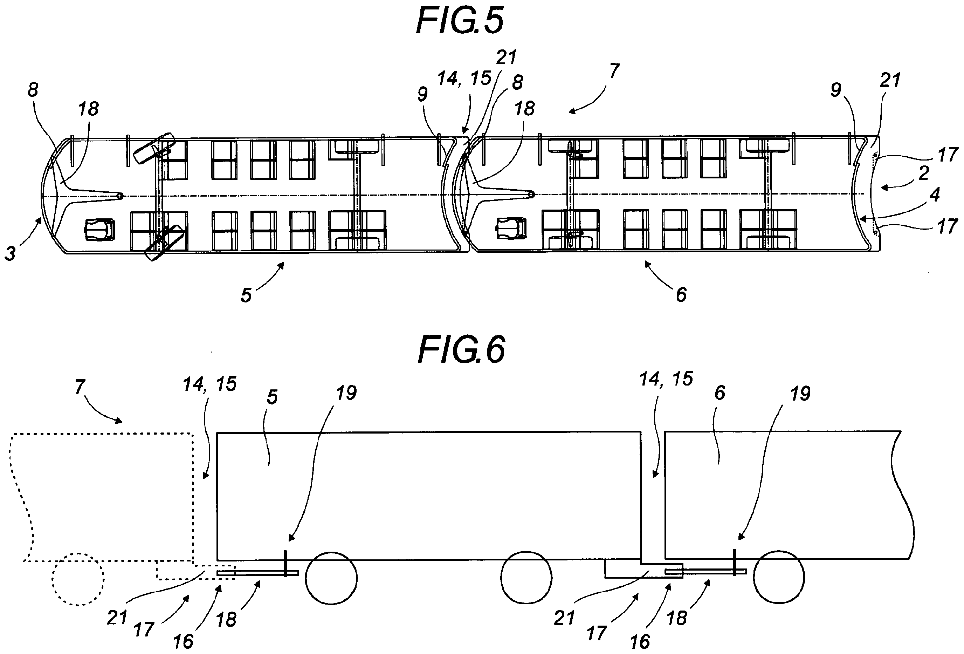

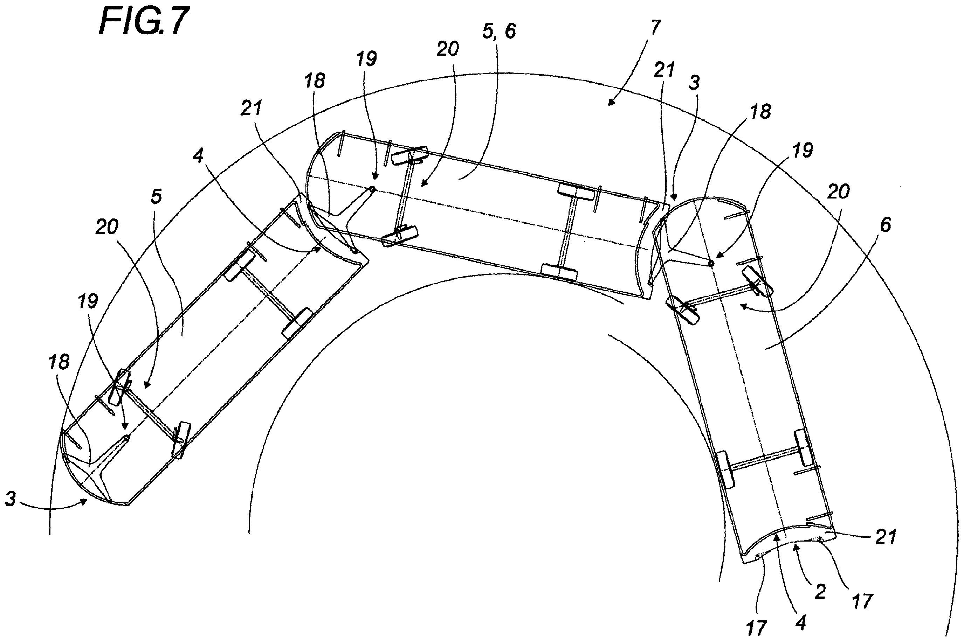

Concernant les moyens de fractionnement de la liaison, il peut s'agir de moyens d'accouplement et de désaccouplement rapides garantissant une direction fixe au timon dans la direction de l'axe longitudinal médian du véhicule routier meneur 5 comme dans le cas représenté sur les figures 5, 6 et 7.

Bien entendu, on prendra soin de permettre les débattements de roulis et de tangage nécessaires au roulage en laissant les libertés et jeux fonctionnels appropriés.

Les moyens de fractionnement de la liaison sont ceux portés pour partie à l'avant du véhicule routier et ceux portés pour partie à l'arrière de celui-ci. ils peuvent être du type immatériels, c'est-à-dire sans support physique de liaison, mais fonctionnant avec des capteurs et des liaisons par signaux porteurs d'informations, le tout géré par une centrale.

La liaison fractionnable est telle que lorsqu'elle se trouve constituée, elle permet de réaliser l'alignement des véhicules et un comportement quasi monotrace du suiveur mais aussi et surtout une distance réduite entre les véhicules se suivant c'est-à-dire entre leurs faces frontales 3 et 4 en regard et ceci en ligne droite et au moins à l'arrêt.

On forme ainsi un passage très court voire le plus court possible d'un véhicule à l'autre pour les passagers connu sous l'expression passage d'intercirculation 15. Ce passage n'est utilisable pour les passagers qu'à l'arrêt et en ligne droite par libération en ouverture des portes de communication.

Dans le cas de passages d'intercirculation suffisamment courts, on peut se dispenser de protection car la sécurité pour les passagers et contre l'interpénétration est garantie. Ainsi, il devient inutile de prévoir un soufflet de protection.

L'éventuelle lacune c'est-à-dire d'intervalle libre pouvant exister en partie inférieure du passage d'intercirculation peut être comblée par une saillie arrière telle que 21 venant à niveau avec les seuils des portes 8 et 9 et les planchers des véhicules adjacents sans rupture de pente ou de plan. Cette saillie peut faire partie de l'arrière du véhicule meneur 5 comme représenté, ou inversement faire partie de l'avant du véhicule suiveur 6, ou bien faire partie de l'un et de l'autre.

L'invention se rapporte également à un ensemble formé de plusieurs véhicules routiers tels 5 et 6 identiques ou semblables à ceux ci-dessus raccordés les uns aux autres pour former une rame ou un train routier 7 avec passage d'intercirculation 15 court et sans protection par exemple par soufflet.

Cette rame ou ce train 7 de véhicules routiers reliés entre eux avec passage d'intercirculation 15 court est conduit par un seul chauffeur se trouvant dans le véhicule de tête.

## Revendications

1. Véhicule routier motorisé pour le transport de passagers, pouvant circuler et fonctionner seul, indépendant en énergie motrice ou relié à un réseau d'alimentation, apte à être relié et articulé à au moins un autre véhicule routier identique ou du même type pour la constitution d'un train routier (7) d'au moins deux véhicules routiers - l'un meneur (5) et l'autre suiveur (6) - articulés entre eux, ledit véhicule comprenant un ensemble directionnel avant (20), ledit véhicule étant tel qu'il comprend :
- une porte de communication (8, 9) à travers chacune de ses faces frontales avant (3) et arrière (4),
- un système de pilotage directionnel à consigne de trajectoire du véhicule suiveur (6),
- des moyens avant de liaison fractionnable et d'orientation (16), qui comportent des moyens d'accouplement et de désaccouplement, et qui se trouvent toujours dans le périmètre d'emprise au sol du véhicule,
- des moyens arrière d'attelage (17) qui comportent des moyens d'accouplement et de désaccouplement complémentaires à ceux des moyens avant de liaison fractionnable et d'orientation (16) ;
et tel que, lorsqu'il est articulé à un autre véhicule identique pour constituer un train routier (7) :
- l'espace intermédiaire (14) réduit existant entre les deux véhicules (5, 6) constitue un passage d'intercirculation (15) d'un véhicule à l'autre pour les passagers traversant les portes de communication (8, 9) des faces frontales avant (3) et arrière (4), mais est trop étroit pour permettre un passage transversal des passagers entre ces deux véhicules (5, 6) ;
- les moyens d'accouplement et de désaccouplement des moyens avant de liaison fractionnable et d'orientation (16) du véhicule suiveur (6) sont raccordés aux moyens d'accouplement et de désaccouplement des moyens arrière d'attelage (17) du véhicule meneur (5), ledit véhicule routier motorisé étant **caractérisé en ce qu'**il comprend :
- une face frontale avant (3) bombée convexe et une face frontale arrière (4) bombée concave; et **en ce que**,
- les moyens avant de liaison fractionnable et d'orientation (16) sont montés pivotant sous le châssis à l'avant du véhicule sur l'axe longitudinal médian du véhicule à proximité de l'ensemble directionnel avant (20); et **en ce que**,
- les moyens avant de liaison fractionnable et d'orientation (16) du véhicule suiveur (6) et les moyens arrière d'attelage (17) du véhicule meneur (5) raccordées par leurs moyens d'accouplement et de désaccouplement respectifs, constituent une liaison articulée fractionnable et dissociable, qui est du type mécanique et non pilotée.

2. Véhicule selon la revendication 1 **caractérisé en ce que** les moyens avant de liaison fractionnable et d'orientation (16) comprennent un timon (18).

3. Véhicule selon la revendication 1 ou 2 **caractérisé en ce que** les moyens d'accouplement et de désaccouplement sont des moyens du type rapide, à savoir ceux autorisant un accouplement et un désaccouplement rapides des moyens avant de liaison fractionnable et d'orientation et des moyens arrière d'attelage (17).

4. Véhicule selon la revendication 1, 2 ou 3 **caractérisé en ce que** la liaison fractionnable comprend un attelage court dissociable.

5. Véhicule selon la revendication 1 **caractérisé en ce qu'**il comporte en outre des portes latérales avant (12) et arrière (13) d'entrée et de sortie des voyageurs.

6. Véhicule selon la revendication 1 **caractérisé en ce qu'**il comporte une saillie (21) à l'avant ou à l'arrière, ou une saillie (21) à l'avant et à l'arrière, qui forme la partie basse du passage d'intercirculation (15) lorsque le véhicule est articulé à un autre véhicule identique pour constituer un train routier (7).

7. Véhicule selon la revendication 6 **caractérisé en ce que** la saillie (21) est à niveau avec le seuil de la porte de communication (8, 9) correspondante et avec le plancher du véhicule.

8. Train routier formé d'au moins deux véhicules successifs selon l'une quelconque des revendications précédentes, articulés entre eux par une liaison fractionnable, **caractérisé en ce que** le véhicule de tête est un véhicule meneur (5) avec chauffeur et **en ce que** le véhicule suiveur (6) présente une trajectoire imposée par le système de pilotage directionnel.

9. Train routier selon la revendication 1 **caractérisé en ce que** les portes de communication (8, 9) des faces avant (3) et arrière (4) de chacun des véhicules sont libérées en ouverture lors de l'arrêt en ligne droite pour le passage longitudinal des voyageurs d'un véhicule dans l'autre.

10. Train routier selon la revendication 8 **caractérisé en ce que** la consigne de trajectoire du système de pilotage directionnel impose un alignement en ligne droite de tous les véhicules.

11. Train routier selon la revendication 10 **caractérisé en ce que** la consigne de trajectoire du système de pilotage directionnel impose une trajectoire quasi monotrace.

12. Train routier selon la revendication 8 **caractérisé en ce que** la partie basse du passage d'intercirculation (15) est occupée par au moins une saillie (21) faisant partie de l'arrière du véhicule meneur (5) ou de l'avant du véhicule suiveur (6), ou par deux saillies faisant partie pour l'une, de l'arrière du véhicule meneur (5) et pour l'autre, de l'avant du véhicule suiveur (6).

13. Train routier selon la revendication 12 **caractérisé en ce que** la partie basse du passage d'intercirculation (15) vient à niveau avec les seuils des portes de communication (8, 9) et avec les planchers des véhicules successifs (5, 6).

## Patentansprüche

1. Motorisiertes Straßenfahrzeug für den Passagiertransport, welches unabhängig mittels motorischer Energie oder an ein Versorgungsnetz angeschlossen einzeln zu fahren und zu funktionieren vermag und welches zur gelenkigen Verbindung mit wenigstens einem weiteren identischen Straßenfahrzeug oder einem Straßenfahrzeug gleichen Typs geeignet ist, um einen Fahrzeugzug (7) mit wenigstens zwei gelenkig miteinander verbundenen Straßenfahrzeugen - einerseits führend (5) und andererseits folgend (6) - zu bilden, wobei das Fahrzeug eine vordere Führungsrichtungseinheit (20) aufweist, und wobei das Fahrzeug derart ausgebildet ist, dass es umfasst:
- je eine Verbindungstür (8, 9) an seiner vorderen (3) und hinteren Stirnseite (4);
- ein Lenkführungssystem zur Vorgabe des Fahrweges des folgenden Fahrzeugs (6);
- vordere Mittel zur lösbaren Verbindung und Ausrichtung (16), welche Ankopplungs- und Entkopplungsmittel aufweisen, und welche sich stets im Bereich des Bodenumfangs des Fahrzeugs befinden;
- hintere Mittel zur Kupplung (17), welche Ankopplungs- und Entkopplungsmittel aufweisen, die zu jenen der vorderen Mittel zur lösbaren Verbindung und Ausrichtung (16) komplementär sind;
und wobei es ferner, wenn es an einem weiteren identischen Fahrzeug angelenkt ist, um einen Fahrzeugzug (7) zu bilden, derart ausgebildet ist, dass:
- der verringerte Zwischenraum (14), welcher zwischen den beiden Fahrzeugen (5, 6) vorhanden ist, einen Durchlass zum Durchgang (15) der Passagiere, welche die Verbindungstüren (8, 9) an der vorderen (3) und hinteren Stirnseite (4) durchqueren, von dem einen Fahrzeug in das andere bildet, aber zu schmal ist, um einen Querdurchlass der Passagiere zwischen den beiden Fahrzeugen (5, 6) zu erlauben;
- die Ankopplungs- und Entkopplungsmittel der vorderen Mittel zur lösbaren Verbindung und Ausrichtung (16) eines folgenden Fahrzeugs (6) mit den Ankopplungs- und Entkopplungsmitteln der hinteren Mittel zur Kupplung (17) des führenden Fahrzeugs (5) verbunden sind,
wobei das motorisierte Straßenfahrzeug **dadurch gekennzeichnet ist, dass** es umfasst:
- eine konvex gekrümmte vordere Stirnseite (3) und eine konkav gekrümmte hintere Stirnseite (4); und dass
- die vorderen Mittel zur lösbaren Verbindung und Ausrichtung (16) schwenkbar unterhalb des Chassis' an der Vorderseite des Fahrzeugs an der Längsmittelachse des Fahrzeugs in Nähe der vorderen Führungsrichtungseinheit (20) montiert sind; und dass
- die vorderen Mittel zur lösbaren Verbindung und Ausrichtung (16) des folgenden Fahrzeugs (6) sowie die hinteren Mittel zur Kupplung (17) des führenden Fahrzeugs (5) mittels ihrer jeweiligen Ankopplungs-und Entkopplungsmittel miteinander verbunden sind, eine lösbare und trennbare Gelenkverbindung bilden, welche von mechanischem Typ und nicht gelenkt ist.

2. Fahrzeug nach Anspruch 1, **dadurch gekennzeichnet, dass** die vorderen Mittel zur lösbaren Verbindung und Ausrichtung (16) eine Deichsel (18) aufweisen.

3. Fahrzeug nach Anspruch 1 oder 2, **dadurch gekennzeichnet, dass** die Ankopplungs- und Entkopplungsmittel nach Art von Schnellkopplungsmitteln ausgebildet sind, nämlich derart, dass sie eine schnelle Ankopplung und Entkopplung der vorderen Mittel zur lösbaren Verbindung und Ausrichtung (16) an die bzw. von den hinteren Mittel(n) zur Kupplung (17) ermöglichen.

4. Fahrzeug nach Anspruch 1, 2 oder 3, **dadurch gekennzeichnet, dass** die lösbare Verbindung eine trennbare Kurzkupplung aufweist.

5. Fahrzeug nach Anspruch 1, **dadurch gekennzeichnet, dass** es ferner vordere (12) und hintere Seitentüren (13) zum Zustieg und Ausstieg der Passagiere aufweist.

6. Fahrzeug nach Anspruch 1, **dadurch gekennzeichnet, dass** es an der Vorderseite oder an der Rückseite einen Vorsprung (21) oder sowohl an der Vorderseite als auch an der Rückseite einen Vorsprung (21) aufweist, welcher den unteren Teil des Durchgangsdurchlasses (15) bildet, wenn das Fahrzeug an ein identisches weiteres Fahrzeug angelenkt worden ist, um einen Fahrzeugzug (7) zu bilden.

7. Fahrzeug nach Anspruch 6, **dadurch gekennzeichnet, dass** der Vorsprung (21) auf dem Niveau der Schwelle der entsprechenden Verbindungstür (8, 9) und des Fußbodens des Fahrzeugs angeordnet ist.

8. Fahrzeugzug, welcher aus wenigstens zwei aufeinanderfolgenden Fahrzeugen nach einem der vorangehenden Ansprüche gebildet ist, welche mittels einer lösbaren Verbindung aneinander angelenkt sind, **dadurch gekennzeichnet, dass** das vordere Fahrzeug ein führendes Fahrzeug (5) mit Fahrer ist, und dass das folgende Fahrzeug (6) einen Fahrweg aufweist, welcher durch das Lenkführungssystem vorgegeben ist.

9. Fahrzeugzug nach Anspruch 8, **dadurch gekennzeichnet, dass** die Verbindungstüren (8, 9) an der Vorder- (3) und Rückseite (4) eines jeweiligen Fahrzeugs während des Anhaltens in geradliniger Anordnung zur Öffnung freigegeben sind, um den Passagieren einen Längsdurchgang von einem Fahrzeug in das andere zu ermöglichen.

10. Fahrzeugzug nach Anspruch 8, **dadurch gekennzeichnet, dass** die Vorgabe des Fahrweges des Lenkführungssystems eine geradlinige Anordnung aller Fahrzeuge vorzugeben vermag.

11. Fahrzeugzug nach Anspruch 10, **dadurch gekennzeichnet, dass** die Vorgabe des Fahrweges des Lenkführungssystems einen quasi einspurigen Fahrweg vorgibt.

12. Fahrzeugzug nach Anspruch 8, **dadurch gekennzeichnet, dass** der untere Teil des Durchgangsdurchlasses (15) mit wenigstens einem Vorsprung (21), welcher von einem Teil der Rückseite des führenden Fahrzeugs (5) oder der Vorderseite des folgenden Fahrzeugs (6) gebildet ist, oder mit zwei Vorsprüngen bestückt ist, welche von einem Teil einerseits der Rückseite des führenden Fahrzeugs (5) und andererseits der Vorderseite des folgenden Fahrzeugs (6) gebildet sind.

13. Fahrzeugzug nach Anspruch 12, **dadurch gekennzeichnet, dass** der untere Teil des Durchgangsdurchlasses (15) auf dem Niveau der Schwelle der Verbindungstüren (8, 9) und der Fußböden der aufeinanderfolgenden Fahrzeuge (5, 6) angeordnet ist.

## Claims

1. Motorised road vehicle for transporting passengers which is capable of running and operating alone and which is independent in terms of driving energy or which is connected to a power supply network and which is capable of being connected and articulated to at least one other road vehicle which is identical or of the same type in order to constitute a road train (7) of at least two road vehicles - one a leading vehicle (5) and the other a following vehicle (6) - which are articulated to each other, the vehicle comprising a front steering assembly (20), the vehicle being such that it comprises:
- a communication door (8, 9) through each front frontal face (3) and rear frontal face (4) thereof,
- a steering control system with route instruction for the following vehicle (6),
- splittable front connection and orientation means (16) which comprise coupling and decoupling means and which are always located within the perimeter of the area taken up by the vehicle,
- rear hitching means (17) which comprise coupling and decoupling means which complement those of the splittable front connection and orientation means (16); and such that when it is articulated to another identical vehicle in order to constitute a road train (7) :
- the reduced intermediate space (14) existing between the two vehicles (5, 6) constitutes an intercommunication (15) from one vehicle to another for the passengers passing through the communication doors (8, 9) of the front frontal face (3) and rear frontal face (4), but is too narrow to enable transverse passage of the passengers between these two vehicles (5, 6) ;
- the coupling and decoupling means of the splittable front connection and orientation means (16) of the following vehicle (6) are connected to the coupling and decoupling means of the rear hitching means (17) of the leading vehicle (5), the motorised road vehicle being **characterised in that** it comprises:
- a convex curved front frontal face (3) and a concave curved rear frontal face (4); and **in that**
- the splittable front connection and orientation means (16) are pivotably mounted under the chassis at the front of the vehicle on the longitudinal centre axis of the vehicle close to the front steering assembly (20); and **in that**
- the splittable front connection and orientation means (16) of the following vehicle (6) and the rear hitching means (17) of the leading vehicle (5) which are connected via their respective coupling and decoupling means constitute a splittable and separable articulated connection which is of the mechanical and non-controlled type.

2. Vehicle according to claim 1, **characterised in that** the splittable front connection and orientation means (16) comprise a drawbar (18).

3. Vehicle according to claim 1 or 2, **characterised in that** the coupling and decoupling means are means of the rapid type, that is to say, ones which enable rapid coupling and decoupling of the splittable front connection and orientation means and the rear hitching means (17).

4. Vehicle according to claim 1, 2 or 3, **characterised in that** the splittable connection comprises a separable short hitching member.

5. Vehicle according to claim 1, **characterised in that** it further comprises front side doors (12) and rear side doors (13) for the entry and exit of travellers.

6. Vehicle according to claim 1, **characterised in that** it comprises a projection (21) at the front or at the rear, or a projection (21) at the front and at the rear, which forms the lower portion of the intercommunication (15) when the vehicle is articulated to another identical vehicle in order to constitute a road train (7).

7. Vehicle according to claim 6, **characterised in that** the projection (21) is level with the threshold of the corresponding communication door (8, 9) and with the floor of the vehicle.

8. Road train formed by at least two successive vehicles according to any one of the preceding claims, which are articulated to each other by means of a splittable connection, **characterised in that** the forward vehicle is a leading vehicle (5) with a driver and **in that** the following vehicle (6) has a route which is imposed by the steering control system.

9. Road train according to claim 1, **characterised in that** the communication doors (8, 9) of the front face (3) and rear face (4) of each of the vehicles are released for opening during stopping in a straight line for the longitudinal passage of the travellers from one vehicle into another.

10. Road train according to claim 8, **characterised in that** the route instruction of the steering control system imposes an alignment in a straight line for all the vehicles.

11. Road train according to claim 10, **characterised in that** the route instruction of the steering control system imposes an almost single-track path.

12. Road train according to claim 8, **characterised in that** the lower portion of the intercommunication (15) is occupied by at least one projection (21) which is part of the rear of the leading vehicle (5) or the front of the following vehicle (6), or by two projections which are part, on the one hand, of the rear of the leading vehicle (5) and, on the other hand, of the front of the following vehicle (6).

13. Road train according to claim 12, **characterised in that** the lower portion of the intercommunication (15) is level with the thresholds of the communication doors (8, 9) and with the floors of the successive vehicles (5, 6).
